# EUROPEAN PATENT APPLICATION

(11) **EP 1 795 413 A2**
(43) Date of publication of application: **13.06.2007**
(21) Application number: 06254942.3
(22) Date of filing: 25.09.2006
(51) Int. Cl.: B60T 8/00

(54) **Electro-hydraulic brake system**

(30) Priority: 07.12.2005 KR 20050118572
(71) Applicant: Mando Corporation, Pyungtaek-City, Kyungki-Do (KR)
(72) Inventor: Hwang, Yong Suk, c/o 102-704, Hyundai Apt., Seoul (KR)
(74) Representative: Pratt, David Martin

(57) **Abstract**

An electro-hydraulic brake (EHB) system including a pump to pump and discharge oil in a reservoir, an accumulator to temporarily store the oil discharged from the pump, inlet valves to deliver the oil stored in the accumulator into the respective wheel cylinders, a return flow path connecting the wheel cylinders to the reservoir, outlet valves provided on the return flow path and adapted to discharge the oil from the wheel cylinders to the reservoir, cut-off valves to open and close flow paths between the wheel cylinders and an exit of a master cylinder, and a simulator. The simulator includes a first chamber communicating with the exit of the master cylinder, a second chamber connected to an entrance of the pump, and a simulator valve. The simulator having the above described configuration is able to prevent deterioration in the reliability and durability of the EHB system and to reduce the installation space of the master cylinder.

## Description

### CROSS-REFERENCE TO RELATED APPLICATION

This application claims the benefit of Korean Patent Application No. 2005-0118572, filed on December 7, 2005 in the Korean Intellectual Property Office, the disclosure of which is incorporated herein by reference.

### BACKGROUND OF THE INVENTION

### 1. Field of the Invention

The present invention relates to an electro-hydraulic brake (EHB) system, and, more particularly, to an electro-hydraulic brake system capable of performing a simulation function.

### 2. Description of the Related Art

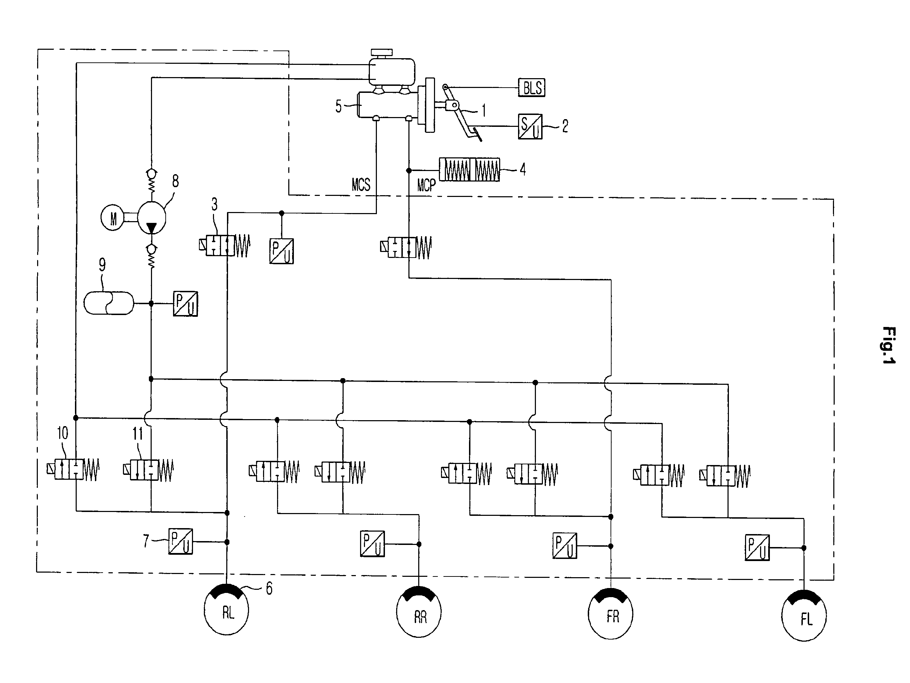

FIG. 1 shows a conventional electro-hydraulic brake system.

In the shown conventional electro-hydraulic brake system (hereinafter, referred to as "EHB system"), if a vehicle operator presses a brake pedal 1, a displacement sensor 2 detects a displacement of the brake pedal 1. Based on the detected result from the sensor 2, cut-ff valves 3 are switched off to separate a master cylinder 5 having a pedal simulator 4 from flow paths of wheel cylinders 6. Then, if signals are inputted from pressure sensors 7 of the wheel cylinders 6 to an electronic control unit (hereinafter, referred to as "ECU"), the ECU calculates pressures in the wheel cylinders 6, and controls the wheel cylinder pressures independently in a feedback control manner by allowing a braking hydraulic pressure, which is normally generated in an accumulator 9 by a pump 8, to be transmitted to the respective wheel cylinders 6 through solenoid valves 10 and 11 provided at suction and discharge ports of the respective wheel cylinders 6.

The above described conventional EHB system must have the pedal simulator 4 to detect the vehicle operator's desire to brake and to generate a pedal reaction force. Upon a failure of the EHB system, a hydraulic pressure in the master cylinder 5, which is generated when the vehicle operator presses the brake pedal 1, is transmitted directly to the wheel cylinders 6 because the cut-off valves 3 are normally opened, to obtain minimum braking even upon the failure of the system.

The master cylinder included in the conventional EHB system is disclosed in Korean Patent Laid-Open Publication No. 2004-0049404. The master cylinder is equipped with a pedal simulator, and a flow path between the master cylinder and the simulator is opened and closed in accordance with a displacement of a piston in the master cylinder. The pedal simulator includes a simulator piston and an elastic member to elastically support the simulator piston. If a braking hydraulic pressure is transmitted to the simulator, the creation of a pedal feeling by a repulsive force of the elastic member is possible.

However, the disclosed master cylinder is configured in such a manner that it has first and second bores having different diameters from each other, and thus, a stepped portion is formed at a contact area between the first and second bores. Accordingly, when a seal member provided around an outer circumference of a piston rectilinearly reciprocates by passing through the stepped portion, there is a high possibility of damage to the seal member, and this may cause deterioration in the reliability and durability of the EHB system.

Further, the master cylinder for the EHB system disclosed in the prior art suffers from a low space utility because it has a different bore structure from other general master cylinders and requires a simulator installation space at the outside of the master cylinder. Furthermore, it is impossible to mount a master cylinder used in a general ABS or ESP system to the EHB system, and thus, the master cylinder for the EHB system has low generality in use.

### SUMMARY OF THE INVENTION

The present invention has been made in order to solve the above problems. It is an aspect of the invention to provide an electro-hydraulic brake system in which a general purpose master cylinder has the function of a simulator, thereby achieving an improvement in the reliability of simulator operation.

Consistent with one aspect, an exemplary embodiment of the present invention provides an electro-hydraulic brake system comprising a brake pedal, wheel cylinders, a master cylinder, a reservoir provided at a side of the master cylinder and adapted to store oil therein, a hydraulic control unit to regulate a braking hydraulic pressure to be transmitted to the wheel cylinders, and a simulator to generate a brake pedal toe force, the electro-hydraulic brake system further comprising: a pump to pump and discharge the oil in the reservoir; an accumulator to temporarily store the oil discharged from the pump; inlet valves to deliver the oil stored in the accumulator into the respective wheel cylinders; a return flow path connecting the respective wheel cylinders to the reservoir; outlet valves provided on the return flow path and adapted to discharge the oil in the wheel cylinders to the reservoir; and cut-off valves to open and close flow paths between the wheel cylinders and an exit of the master cylinder, and the simulator may comprise simulation chambers to store the oil therein and a simulator valve to open and close a flow path connected to the simulation chambers.

The simulation chambers may include a first chamber communicating with the exit of the master cylinder and a second chamber connected to an entrance of the pump, and the simulator valve is provided at an entrance side of the second chamber.

The simulator may further comprise a check valve provided to bypass the simulator valve and adapted to discharge the oil from the second chamber, so as to prevent backflow of the oil.

The hydraulic control unit may comprise: a relief flow path connecting an exit of the accumulator to exits of the outlet valves; and a relief valve provided on the relief flow path to discharge the oil stored in the accumulator into the return flow path.

The hydraulic control unit may further comprise: balance flow paths connecting **the left and right wheel cylinders of front wheels and rear wheels, respectively;** and balance valves provided on the balance flow paths, respectively.

The simulator may be included in the hydraulic control unit, and the hydraulic control unit constitutes a single block.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a hydraulic circuit diagram of a conventional EHB system; and
FIG. 2 is a hydraulic circuit diagram of an EHB system consistent with a preferred embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

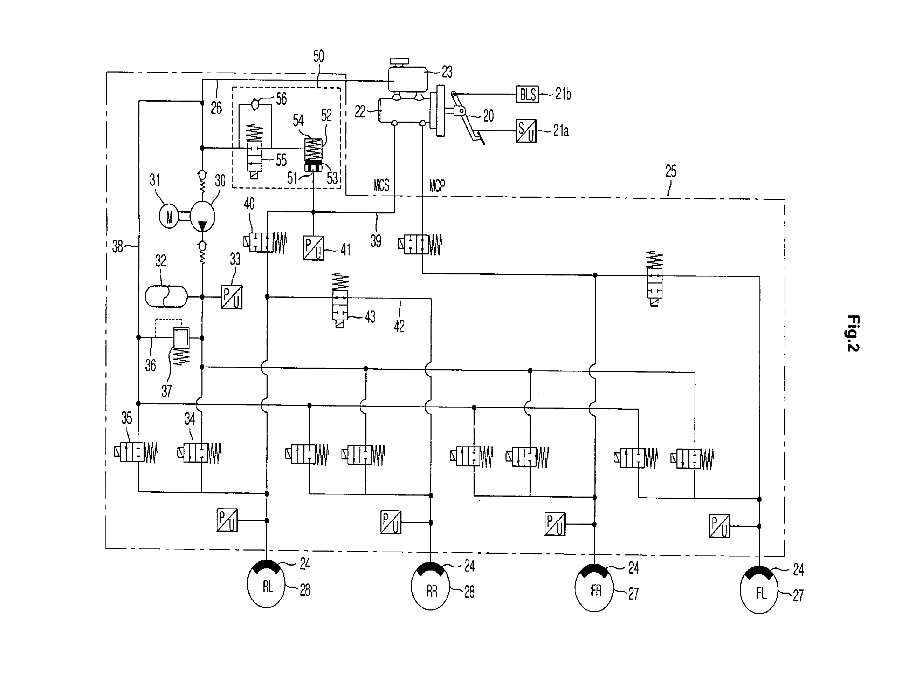

FIG. 2 is a hydraulic circuit diagram of an EHB system consistent with a preferred embodiment of the present invention.

Referring to FIG. 2, the electro-hydraulic brake system (hereinafter, referred to as "EHB system") consistent with the present invention comprises a brake pedal 20 to be operated by a vehicle operator upon a braking operation, a master cylinder 22 to receive a force transmitted from the brake pedal 20, a reservoir 23 located at a top of the master cylinder 22 and used to store oil therein, wheel cylinders 24 to receive the oil delivered from the reservoir 23 and adapted to brake respective brake wheels 27 and 28, and a hydraulic control unit 25 (hereinafter, referred to as "HCU") provided between the master cylinder 22 and the wheel cylinders 24, the HCU including a variety of flow paths, a plurality of valves, sensors, pump, accumulator, etc.

The brake pedal 20 is provided with a pedal displacement sensor 21 a to detect a vehicle operator's desire to brake, and a brake light switch (BLS) 21 b to detect the operation of the brake pedal 20.

The master cylinder 22 is provided at the top thereof with the reservoir 23 storing the oil therein and formed at a bottom thereof with an exit 22a. The oil discharged from the exit 22a of the master cylinder 22 is directed to the HCU 25. Also, to allow the delivery of the oil from the reservoir 23 to the HCU 25 or vice versa, a normal flow path 26 is provided between the reservoir 23 and an entrance of the pump 30 that will be explained hereinafter.

The HCU 25 includes a plurality of valves 34, 35, 40, and 43 having an inner flow path and adapted to regulate a braking hydraulic pressure to be transmitted to the wheel cylinders 24, an accumulator 32, a pump 30 to pump the oil, a motor 32, etc., and these constituent elements of the HCU 25 are grouped into a single compact block.

The pump 30 included in the HCU 25 serves to pump the oil from the reservoir 23 at a high pressure, so as to generate a braking hydraulic pressure. The motor 31 is provided at a side of the pump 30 to provide the pump 30 with a drive force.

The accumulator 32 is provided between an exit of the pump 30 and the inlet valves 34 and adapted to temporarily store the high-pressure oil generated by operation of the pump 30. Preferably, the accumulator 32 has a diaphragm structure filled with gas, enabling the charge of the high-pressure oil therein. An accumulator pressure sensor 33 is provide at an exit side of the accumulator 32 and adapted to measure the pressure of the oil in the accumulator 32. By comparing the measured oil pressure with a preset pressure, the pump 30 is operated if the measured oil pressure is lower than the preset pressure, so as to suction the oil from the reservoir 23 and charge the oil in the accumulator 32.

To prevent an excessive pressure from being generated in the accumulator 32 due to malfunction of the EHB system, a relief flow path 36 is provided to connect an exit of the accumulator 32 and exits of the outlet valves 35 that will be explained, and a relief valve 37 is provided on the relief flow path 36. The relief valve 37 is normally kept in a closed state, but is opened if the pressure of the oil in the accumulator 32 exceeds the preset pressure, thereby serving to prevent an excessive pressure from being generated in the accumulator 32.

The inlet valves 34 are located at the exit side of the accumulator 32. The inlet valves 34 are normally kept in a closed state, but are opened if the vehicle operator presses the brake pedal 20, so as to deliver the brake oil stored in the accumulator 32 to the wheel cylinders 24.

The HCU 25 includes a return flow path 38 connecting the wheel cylinders 24 to the reservoir 23. The outlet valves 35 are provided on the return flow path 38 and adapted to discharge the oil in the wheel cylinders 24 to the reservoir 23.

Backup flow paths 39 are provided between the exit 22a of the master cylinder 22 and the wheel cylinders 24 and adapted to produce a flow path upon a failure of the EHB system.

Cut-off valves 40 are provided on the backup flow paths 39, respectively, to open and close the backup flow paths 39. A master cylinder pressure sensor 41 is provided between the cut-off valves 40 and the exit 22a of the master cylinder 22 and adapted to measure the pressure of the oil in the master cylinder 22.

The HCU 25 also includes balance flow paths 42 to connect the right and left wheel cylinders 24 of the front wheels 27 and the rear wheels 28, respectively. Normal open type balance valves 43 are provided on the balance flow paths 42, respectively, to compensate for an unbalance in braking pressures between the left and right wheel cylinders 24. When it is desired to independently control the respective wheel cylinders 24 in consideration of a vehicle slip, etc., the balance valves 43 are switched off.

The EHB system of the present invention further comprises a simulator 50 to generate a brake pedal toe force 20.

The simulator 50 includes simulation chambers 51 and 52 to store the oil therein, and a simulator valve 55 to open and close a flow path connected to the simulation chambers 51 and 52.

The simulation chambers 51 and 52 are a first chamber 51 and a second chamber 52, which are divided by a piston 53 received therein. The first chamber 51 is connected to the exit of the master cylinder 22, and the second chamber 52 is connected to a flow path communicating with the entrance of the pump 30. An elastic member 54 is disposed in the second chamber 52 to be expanded and constricted by the pressure of the oil introduced into the first chamber 51.

The simulator valve 55 is provided on the flow path connecting the entrance of the pump 30 to the second chamber 52, and is normally kept in a closed state. A check valve 56 is provided to bypass the normal close type simulator valve 55 and adapted to discharge the oil stored in the first chamber 51, so as to prevent backflow of the oil.

Preferably, the above described simulator 50 may be included in the HCU 25, to constitute a single block along with the HCU 25. Also, the HCU 25 including the simulator 50 and an ECU (not shown) to control electrically operable constituent elements constitute an electro-hydraulic control unit (EHCU) in the form of a single compact block.

As stated above, the EHB system of the present invention is able to generate a brake pedal toe force regardless of the displacement of the piston included in the master cylinder. Therefore, differently from conventional master cylinders for the EHB system requiring high accuracy, the EHB system of the present invention has the effect of preventing deterioration in the reliability and durability thereof due to wear of a seal member, etc. Also, as a result of mounting the simulator in the HCU independently of the master cylinder, the EHB system of the present invention has the effect of reducing the installation space of the master cylinder and allowing the use of a general use master cylinder.

Hereinafter, the operation of the EHB system consistent with the preferred embodiment of the present invention will be explained.

The EHB system operates in a normal mode under a normal operating situation, but performs a backup mode to brake a vehicle upon a failure of the EHB system.

In the normal mode, if the vehicle operator presses the brake pedal 20 to brake a vehicle, one of the pedal displacement sensor 21a, BLS 21b, and master cylinder pressure sensor 41, detects the vehicle operator's desire to brake and transmits a corresponding signal to the ECU. Then, the ECU switches off the normal open type cut-off valves 40, to cut off the backup flow paths 39 connected to the wheel cylinders 24. Simultaneously, the ECU switches on the normal close type simulator valve 55, to connect the second chamber 52 to the reservoir 23. Thereby, the same pressure as that in the reservoir 23 is generated in the second chamber 52. Also, since the exit of the master cylinder 22 communicates with the first chamber 51, the pressure in the first chamber 51 is kept at the same level as that in the master cylinder 22. In this case, the pressure of the oil in the master cylinder 22, i.e. the pressure in the first chamber 51, balances with the elastic force of the elastic member 54 received in the second chamber 52 on the basis of the piston 53. Accordingly, if the vehicle operator presses the brake pedal 20, the high-pressure oil in the master cylinder 22 is delivered into the first chamber 51, thereby causing the elastic member 54 to be constricted and the piston 53 to be moved upward. As a result, a pedal feeling corresponding to the elastic force of the elastic member 54 can be created.

Simultaneously, a displacement value and pressure value detected by the pedal displacement sensor 21 and master cylinder pressure sensor 41 are transmitted to the ECU, to thereby be used to determine the vehicle operator's desire to brake. Based on the determined result, the ECU switches on the inlet valves 34 to deliver the high-pressure oil received in the accumulator 32 to the wheel cylinders 24, so as to transmit a hydraulic pressure, which corresponds to the vehicle operator's desire to brake, to the wheel cylinders 24. If the oil reaches the outlet valves 35 along the return flow path 38 after staying short in the wheel cylinders 24 to brake the vehicle, the ECU sends a signal to switch on the outlet valves 35, so as to return the oil into the reservoir 23. The returned oil as well as oil previously stored in the reservoir 23 are compressed by the pump 30, and the compressed oil is stored in the accumulator 32 to be again delivered to the wheel cylinders 24 through the inlet valves 34. As the above described course is repeatedly performed, the wheel cylinders 24 perform an intermittent braking for repeatedly braking the vehicle with a short interval.

To prevent an excessive pressure of the oil from being charged in the accumulator 32, the relief valve 37 is opened if the oil having a pressure more than a preset pressure is charged in the accumulator 32, thereby allowing the oil in the accumulator 32 to be returned through the relief flow path 36 and return flow path 38.

Also, if the displacement value detected by the pedal displacement sensor 21 a is larger than a preset value, the simulator valve 55 is closed. If the simulator valve 55 is closed, the oil in the second chamber 52 is not discharged any more, thereby causing downward movement of the piston 53 to stop, and preventing further operation of the brake pedal 20. This has the effect of preventing the master cylinder 22 and simulator 50 from being damaged by an excessive pedal toe force applied by the vehicle operator.

In the case where the pressure applied to the brake pedal 20 is removed or no current is applied during a normal mode operation due to a failure of the system, the oil stored in the first chamber 51 is returned to the master cylinder 22. In this case, since the simulator valve 55 is normally kept in a closed state, the oil in the master cylinder 22 cannot be introduced into the second chamber 52 by passing through the simulator valve 55, and thus, the oil in the first chamber 51 also cannot be returned to the master cylinder 22. The check valve 56 is installed to solve this problem, and allows the oil in the reservoir 23 to be supplied into the second chamber 52 even in the closed state of the simulator valve 55, thereby enabling the oil in the first chamber 51 to be returned to the master cylinder 22.

Meanwhile, the EHB system performs a backup mode operation upon a failure thereof. In this case, the cut-off valves 40 are kept in an opened state, allowing the passage of the oil through the backup flow paths 39 between the exit of the master cylinder 22 and the wheel cylinders 24. Thus, a braking hydraulic pressure in the master cylinder 22 is transmitted to the wheel cylinders 24 through the backup flow paths 39, resulting in a vehicle braking operation. In conclusion, a wheel braking by the pedal toe force generated when the vehicle operator presses the brake pedal 20 is possible even upon a failure of the EHB system. In this case, since the second chamber 52 is closed by the normal close type simulator valve 55, the braking hydraulic pressure generated by the pedal toe force is not transmitted to the first chamber 51, and wholly transmitted to the wheel cylinders 24.

Also, since the EHB system of the present invention has the balance valves 43, even if the left and right wheel cylinders 24 of the front wheels 27 or rear wheels 28 have different braking pressures from each other, the EHB system can compensate for the pressure difference, thereby equalizing the braking pressures of both the wheel cylinders 24 with each other.

However, when the wheels 27 and 28 have a slip phenomenon, it is necessary to independently control the respective wheel cylinders 24. Therefore, in this case, the balance valves 43 are switched off, to prevent the braking pressure of one wheel cylinder 24 from being transmitted to the other wheel cylinders 24.

As apparent from the above description, the present invention provides an electro-hydraulic brake (EHB) system in which a simulator for generating a pedal toe force is operable independently of operation of a master cylinder, thereby preventing deterioration in the reliability and durability of the EHB system due to wear of a seal member, etc. which may be caused in the master cylinder.

Further, the present invention has no need for a high-accuracy master cylinder exclusive to the EHB system, and can employ a general use master cylinder usable in other brake systems. This has the effect of reducing manufacturing costs of the system.

Furthermore, in the electro-hydraulic brake system consistent with the present invention, the simulator is installed in a hydraulic control unit, thereby enabling a reduction in the installation space of the master cylinder.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. An electro-hydraulic brake system comprising a brake pedal, wheel cylinders, a master cylinder, a reservoir provided at a side of the master cylinder and adapted to store oil therein, a hydraulic control unit to regulate a braking hydraulic pressure to be transmitted to the wheel cylinders, and a simulator to generate a brake pedal toe force, the electro-hydraulic brake system further comprising:
a pump to pump and discharge the oil in the reservoir;
an accumulator to temporarily store the oil discharged from the pump;
inlet valves to deliver the oil stored in the accumulator into the respective wheel cylinders;
a return flow path connecting the respective wheel cylinders to the reservoir;
outlet valves provided on the return flow path and adapted to discharge the oil in the wheel cylinders to the reservoir; and
cut-off valves to open and close flow paths between the wheel cylinders and an exit of the master cylinder,
wherein the simulator comprises simulation chambers to store the oil therein and a simulator valve to open and close a flow path connected to the simulation chambers.

2. The system according to claim 1, wherein the simulation chambers include a first chamber communicating with the exit of the master cylinder and a second chamber connected to an entrance of the pump, and the simulator valve is provided at an entrance side of the second chamber.

3. The system according to claim 2, wherein the simulator further comprises a check valve provided to bypass the simulator valve and adapted to discharge the oil from the second chamber, so as to prevent backflow of the oil.

4. The system according to claim 2 or 3, wherein the hydraulic control unit comprises:
a relief flow path connecting an exit of the accumulator to exits of the outlet valves; and
a relief valve provided on the relief flow path to discharge the oil stored in the accumulator into the return flow path.

5. The system according to claim 4, wherein the hydraulic control unit further comprises:
balance flow paths connecting **the left and right wheel cylinders of front wheels and rear wheels, respectively;** and
balance valves provided on the balance flow paths, respectively.

6. The system according to claim 5, wherein the simulator is included in the hydraulic control unit, and the hydraulic control unit constitutes a single block.

7. An electro-hydraulic brake system comprising a brake pedal, wheel cylinders, a master cylinder, a reservoir provided at a side of the master cylinder and adapted to store oil therein, a hydraulic control unit to regulate a braking hydraulic pressure to be transmitted to the wheel cylinders, and a simulator to generate a brake pedal toe force, the electro-hydraulic brake system further comprising:
a pump to pump and discharge the oil in the reservoir;
an accumulator to temporarily store the oil discharged from the pump;
inlet valves to deliver the oil stored in the accumulator into the respective wheel cylinders;
a return flow path connecting the respective wheel cylinders to the reservoir;
outlet valves provided on the return flow path and adapted to discharge the oil in the wheel cylinders to the reservoir;
cut-off valves to open and close flow paths between the wheel cylinders and an exit of the master cylinder;
balance flow paths connecting **the left and right wheel cylinders of front wheels and rear wheels, respectively;** and
balance valves provided on the balance flow paths, respectively,
wherein the simulator comprises simulation chambers to store the oil therein and a simulator valve to open and close a flow path connected to the simulation chambers, and
wherein the simulation chambers include a first chamber communicating with the exit of the master cylinder and a second chamber connected to an entrance of the pump, and the simulator valve is provided at an entrance side of the second chamber
